# EUROPEAN PATENT SPECIFICATION

(11) **EP 1 427 170 B1**
(45) Date of publication and mention of the grant of the patent: **14.06.2006**
(21) Application number: 03026736.3
(22) Date of filing: 21.11.2003
(51) Int. Cl.: H04L 29/08

(54) **Peer-to-Peer content broadcast method**
Verfahren zur Rundsendung von Inhalten eines Peer-to-Peer Netzes
Methode de diffusion de contenu pair-à-pair

(30) Priority: 02.12.2002 US 307752
(43) Date of publication of application: 09.06.2004
(73) Proprietor: MICROSOFT CORPORATION, Redmond, Washington 98052 (US)
(72) Inventor: Vert, John, Seattle Washington 98109 (US); Mesgar, Eugene,, Menlo Park, CA 94025 (US); Zarakhovsky, Eugene, Seattle Washington 98121 (US); Saretto, Cesare John, Seattle Washington 98102 (US)
(74) Representative: Grünecker, Kinkeldey, Stockmair & Schwanhäusser Anwaltssozietät

(56) References cited:
- EP-A- 0 993 163
- AHLBORN B ET AL: "OAI-P2P: a peer-to-peer network for open archives" PROC. OF THE ICPPW'02, 18 August 2002 (2002-08-18), pages 462-468, XP010608483

## Description

This invention relates generally to group connectivity over a network and, more particularly, relates to file transfer in a peer-to-peer network.

As peer to peer networks increase in number and popularity and experience new applications, the drawbacks in current peer-to-peer technologies become more noticeable. The increase in PC computing power also emphasizes these shortcomings when contrasted with the lack of a concomitant substantial increase in the bandwidth available for use in peer-to-peer connectivity.

For example, existing techniques and methodologies for the transfer of files in peer-to-peer networks are often awkward and no1iceably slow, inhibiting npid sharing of information over the network. When the peer-to-peer system is being employed for real-time group interactivity, any substantial delay in file transfer can result in a disconnected feeling, where a supposedly real-time interaction begins to feel to the user like a more stilted less dynamic interaction. Therefore, it is important to speed file transfer whenever possible.

One primary reason for the slowness of current peer-to-peer file transfer protocols lies in the method with which file transfer load is apportioned among the peer-to-peer nodes. For example, in one typical transfer technique, a node having a file to share with the group simply fans the file out to all group members by uploading the file to each in parallel or serial. This imposes a significant bandwidth and computational penalty on the dispersing node since it has to serve each requester or each node receiving the material, and has to do so in a generally simultaneous or contemporaneous manner. As a result, the file transfer speed relative to the entire group is bounded by the computational capabilities and connection speed of the dispersing node.

There is a need for a peer-to-peer file transfer mechanism that provides sufficient speed of transfer so that substantially real-time group interactions using a peer-to-peer network may be had without undue interruption due to file transfer delay.

In "OAI-P2P: a peer-to-peer network for open archives", PROC. OF THE ICPPW'02, 18 August 2002, pp. 463-468, Ahlborn B. et al. describe peer-to-peer protocols for sharing information between users, wherein meta data is used as glue between contents and community. Each participating peer can be consumer and provider of data services. A peer-to-peer infrastructure is suggested for storing, querying and exchanging meta data, wherein each participating peer can make its meta data information available. The peers publish what they offer by announcing which kind of services they provide.

EP-A-0993163 discloses a system wherein data packages are served to a client through a flexible, non-deterministic distributed system of peer clients which cache the data packages in order to maximize efficiency and speed for serving the data package to the client. In this system, whenever a client requests a data package, first it is determined if the data package is located locally on the memory, and if it is not found then an attempt is made to retrieve the data package from a peer client on the local network, and if it is further on not found a last attempt is made to retrieve the data packet from the server.

It is the object of the present invention to provide more efficient methods for transferring files between nodes in a peer-to-peer network.

The object is solved by the subject matter of the independent claims.

Preferred embodiments of the present invention are defined by the dependent claims.

The present invention is directed to a system, method, and architecture for efficiently transferring files in a peer-to-peer network. The system is adapted to promote substantially real-time file sharing, which is especially beneficial in an online group intetactionenvifoament. In an embodiment of the invention, many nodes of the peer-to-peer network serve as both clients and servers, both receiving file information and transmitting the received information to other nodes. The file transfer burden is apportioned in an embodiment of the invention more evenly across the nodes of the network so that typically no one node bears a disproportionate file transfer load. This is useful in ensuring that the file is transferred to every node in the network as quickly as possible.

In an embodiment of the invention, file dissemination is initiated by the publication of file metadata. Having received the metadata, each node determines whether it wishes to receive the associated file. If it desires to receive the file, the relevant node or nodes utilize a pull model to request the file contents from respective neighbors. In an embodiment of the invention, each node that has or receives the file advertises its possession of the file so that other nodes may then obtain the file from these secondary sources. In an embodiment of the invention, a node may substantially simultaneously receive a file via streaming download from a particular node and serve that same file via upload to another node. In this embodiment, a generation identifier is preferably used to prevent two nodes, each having the same part of a file, from attempting to retrieve the remainder of the file from each other.

Additional features and advantages of the invention will be made apparent from the following detailed description of illustrative embodiments that proceeds with reference to the accompanying figures.

### BRIEF DESCRIPTION OF THE DRAWINGS

While the appended claims set forth the features of the present invention with particularity, the invention, together with its objects and advantages, may be best understood from the following detailed description taken in conjunction with the accompanying drawings of which:
Figure 1 is a schematic diagram generally illustrating an exemplary computer system usable to implement an embodiment of the invention;
Figure 2 is a schematic diagram illustrating an exemplary peer-to-peer network for facilitating file transfer according to an embodiment of the invention;
Figure 3 is a flowchart illustrating a process of file dissemination and retrieval for use in a peer-to-peer network according to an embodiment of the present invention;
Figure 4 is a flowchart illustrating a file transfer prioritization technique for use in a peer-to-peer network according to an embodiment of the present invention; and
Figure 5 is a schematic diagram showing a node client/server architecture according to an embodiment of the invention.

### DETAILED DESCRIPTION OF THE INVENTION

Turning to the drawings, wherein like reference numerals refer to like elements, the invention is described hereinafter in the context of a computing environment. Although it is not required for practicing the invention, the invention is described as it is implemented by computer-executable instructions, such as program modules, that are executed by a Personal Computer (PC). Generally, program modules include routines, programs, objects, components, data structures and the like that perform particular tasks or implement particular abstract data types.

The invention may be implemented in computer system configurations other than a PC. For example, the invention may be realized in hand-held devices, mobile phones, multi-processor systems, microprocessor-based or programmable consumer electronics, network PCs, minicomputers, mainframe computers and the like. The invention may also be practiced in distributed computing environments, where tasks are performed by remote processing devices that are linked through a communications network. In a distributed computing environment, program modules may be located in both local and remote memory storage devices.

Thus, although the following detailed description of the invention is set forth in the context of an exemplary general-purpose computing device such as conventional PC 20, it will be understood that the invention may be incorporated into many types of computing environments as suggested above.

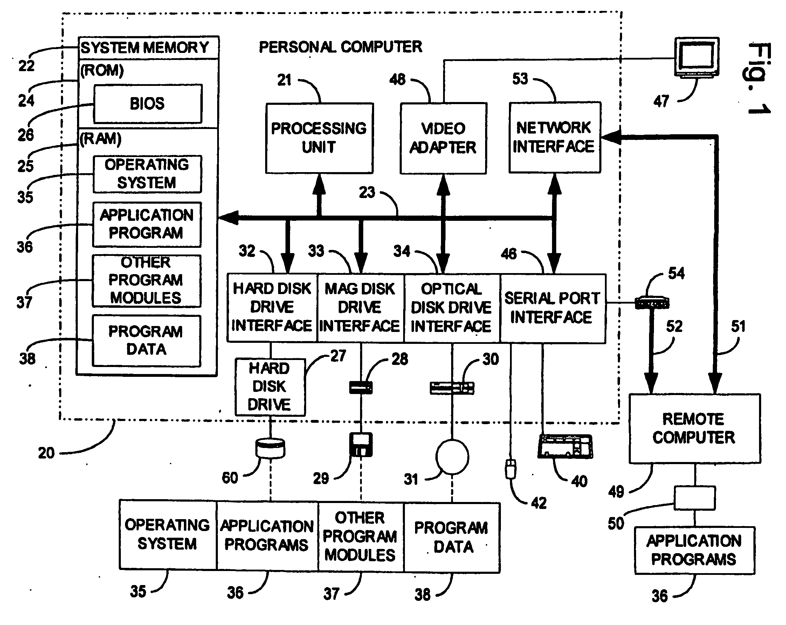

Before describing the invention in detail, a computing environment in which embodiments of the invention may be implemented is described in connection with Figure 1A. The PC 20 includes a processing unit 21, a system memory 22, and a system bus 23 that couples various system components including the system memory to the processing unit 21. The system bus 23 may be any of several types of bus structures including a memory bus or memory controller, a peripheral bus, and a local bus using any of a variety of bus architectures. The system memory includes read only memory (ROM) 24 and random access memory (RAM) 25. A basic input/output system (BIOS) 26, containing the basic routines that help to transfer information between elements within the PC 20, such as during start-up, is stored in ROM 24. The PC 20 further includes a hard disk drive 27 for reading from and writing to a hard disk 60, a magnetic disk drive 28 for reading from or writing to a removable magnetic disk 29, and an optical disk drive 30 for reading from or writing to a removable optical disk 31 such as a CD ROM or other optical media.

The hard disk drive 27, magnetic disk drive 28, and optical disk drive 30 are connected to the system bus 23 by a hard disk drive interface 32, a magnetic disk drive interface 33, and an optical disk drive interface 34, respectively. The drives and their associated computer-readable media provide nonvolatile storage of computer readable instructions, data structures, program modules and other data for the PC 20. Although the exemplary environment described herein employs one or more of a hard disk 60, a removable magnetic disk 29, and a removable optical disk 31, it will be appreciated by those skilled in the art that other types of computer readable media which can store data that is accessible by a computing device, such as magnetic cassettes, flash memory cards, digital video disks, Bernoulli cartridges, random access memories, read only memories, and the like may also be used in the exemplary operating environment.

A number of program modules may be stored on the hard disk 60, magnetic disk 29, optical disk 31, ROM 24 or RAM 25, including an operating system 35, one or more applications programs 36, other program modules 37, and program data 38. A user may enter commands and information into the PC 20 through input devices such as a keyboard 40 and a pointing device 42. Other input devices (not shown) may include a microphone, joystick, game pad, satellite dish, scanner, or the like. These and other input devices are often connected to the processing unit 21 through a serial port interface 46 that is coupled to the system bus, but may be connected by other interfaces, such as a parallel port, game port or a universal serial bus (USB). A monitor 47 or other type of display device is also connected to the system bus 23 via an interface, such as a video adapter 48. In addition to the monitor, PCs typically include other peripheral output devices, not shown, such as speakers and printers.

The PC 20 operates in a networked environment using fixed or transient logical connections to one or more remote computers, such as a remote computer 49. The remote computer 49 may be in general another PC, a server, a router, a network PC, a peer device or other common network node, or any other device type such as any of those mentioned elsewhere herein. The remote computer 49 typically includes many or all of the elements described above relative to the PC 20, although there is no such requirement, and only a memory storage device 50 has been illustrated in Fig. 1A. The logical connections depicted in Fig. 1 A include a local area network (LAN) 51 and a wide area network (WAN) 52. Such networking environments are commonplace in offices, enterprise-wide computer networks, intranets and the Internet.

When used in a LAN networking environment, the PC 20 is connected to the local network 51 through a network interface or adapter 53. When used in a WAN networking environment, the PC 20 typically includes a modem 54 or other means for establishing communications over the WAN 52. The modem 54, which may be internal or external, is connected to the system bus 23 via the serial port interface 46. Although a standard modem may be used in an implementation of an embodiment of the invention, a broadband connection, such as one having a capacity of between about 120 kbps and 1.5Mbps or more, will generally yield better performance. Program modules depicted relative to the PC 20, or portions thereof, may be stored in the remote memory storage device. It will be appreciated that the network connections shown are exemplary and other means of establishing a communications link between the computers may be used. Additionally, the invention is not intended to be limited to a particular network type. Any network type, wired or wireless, fixed or transient, circuit-switched, packet-switched or other network architectures, may be used to implement the present invention.

In the description that follows, the invention will be described with reference to acts and symbolic representations of operations that are performed by one or more computing devices, such as PC 20, unless indicated otherwise. As such, it will be understood that such acts and operations, which are at times referred to as being computer-executed, include the manipulation by the processing unit of the computer of electrical signals representing data in a structured form. This manipulation transforms the data or maintains it at locations in the memory system of the computer, which reconfigures or otherwise alters the operation of the computer in a manner well understood by those skilled in the art. The data structures where data is maintained are physical locations of the memory that have particular properties defined by the format of the data. However, while the invention is being described in the foregoing context, it is not meant to be limiting as those of skill in the art will appreciate that various of the acts and operations described hereinafter may also be implemented in hardware.

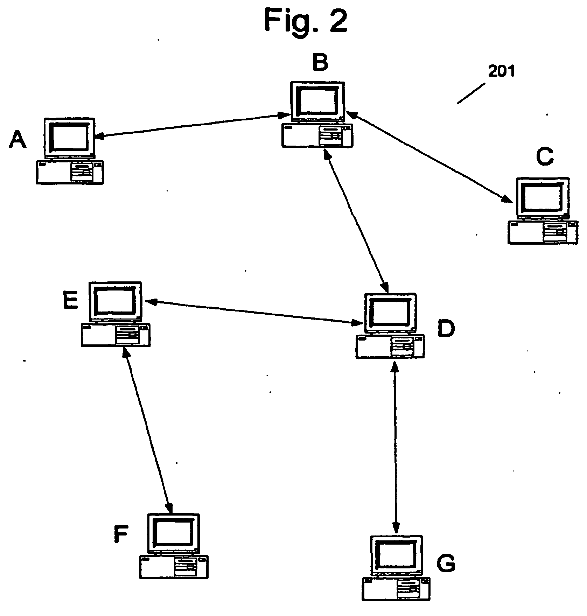

An exemplary peer-to-peer network 201 usable in accordance with an embodiment of the invention is shown schematically in Figure 2. Typically, a peer-to-peer network using the invention will contain between about 2-10 nodes, although larger networks may be used to implement the invention as well. The double-ended lines between nodes A-G of the peer-to-peer network represent peer-to-peer network connections. Thus for example, in the illustrated arrangement, node A is connected directly to node B but only indirectly (i.e. not via a single link) to node C. Each peer-to-peer connection may actually comprise a number of physical and/or logical underlying connections, such as may be associated with an underlying network over which the peer-to-peer network is laid. Note that although the peer-to-peer network nodes will generally be computers, such is not required. Rather, any type of device having appropriate networking facilities may be used depending upon the user's choice of equipment.

To increase the performance of the peer-to-peer network, each computer in the group may also store "common files" in a database that is kept current with the other members' databases in the group. This database can be kept current in many different ways. In one implementation, whenever a particular computer changes the database, it can propagate these changes to the other computers in the peer-to-peer network via the connections described above. Alternatively, the computers in the group can automatically update their databases after a certain time period passes, polling the computers in logical connection with them for newer versions of the database. While peer-to-peer technologies generally have a number of advantages including independence from a central server and often better resource utilization, the present invention may also utilize a central server or facility (not shown) connected to one or more nodes for data storage or for maintaining state of a particular peer-to-peer group of nodes or particular offline members.

The peer-to-peer network 201 can be constructed using existing peer-to-peer technologies. For example, in general, a node connects to the network 201 by establishing a connection to one of the existing nodes. At this point, the new node may "piggy back" on the connections (to other nodes) of the existing node by evaluating the other connections and nodes, if any, of the existing node, and choosing to connect to some, all, or none of those other nodes. The connecting node generally takes into account the cost of a new connection versus the beneficial attributes of the new connection in deciding whether to create additional connections based on the existing node's connections. Each node of the peer-to-peer network also maintains a record of the instantaneous state of the portions of the network of which it has knowledge, so as to track the relevant network membership portion and status at any given time as will be appreciated by those of skill in the art. It is the collection of these various records on the various nodes that actually forms the peer-to-peer network since the connections between nodes are typically not actually hard wired and in most cases are also transient in the sense of being packet switched rather than circuit switched.

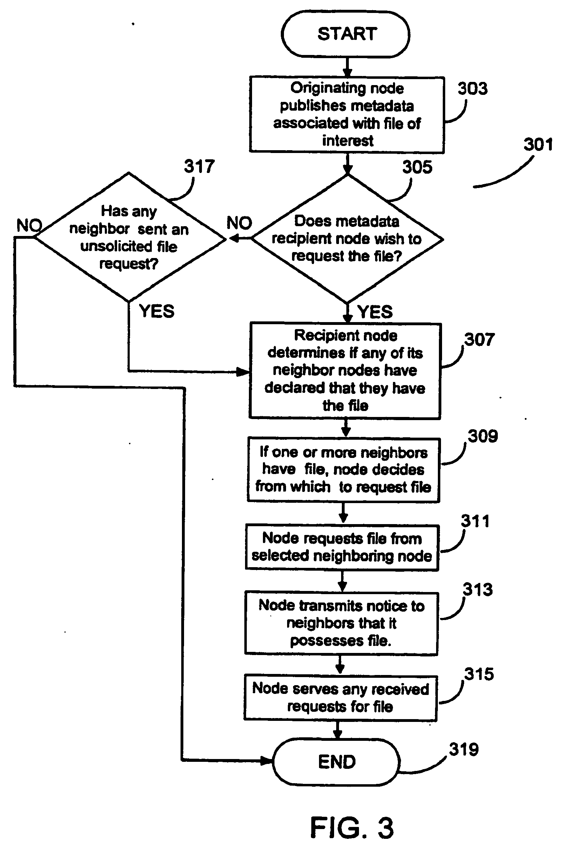

In accordance with one aspect of the invention, a file distribution is initiated by a node of the peer-to-peer network, such as node A. As will be described hereinafter in greater detail, the file data flows through the network to the appropriate recipient nodes while the transfer technique distributes the transfer costs relatively evenly across the network. In particular, with reference to the flow chart 301 of Figure 3, it can be seen that the distributing node first publishes metadata associated with the file of interest in step 303. The metadata is not file data, but rather represents information about the file itself as well as the context of the file, such as priority relative to other files. The metadata is preferably small enough to be easily flooded to all nodes via existing connections with minimal bandwidth usage via the regular peer-to-peer record flooding technique. According to this technique, all recipient nodes sequentially forward the metadata until the data has reached all nodes of the network. Note that when a node receives duplicate metadata, such as over different connections to different nodes, it simply discards any duplicate information without forwarding, and forwards only the first received copy of the metadata.

In an embodiment of the invention, the metadata comprises a file name, a file size, a set of distribution characteristics, expiration information, and any module-specific information that the publishing application or module wishes to provide. In addition, the metadata may also include any other appropriate information such as creation and/or modification date, owner, creator, priority, etc. The file name within the metadata is simply an identifier linked to the file. The filename need not be absolutely unique, although it is preferably an identifier that is specific enough so that it is unlikely to be identically associated with any file other than the appropriate file on any node of the network 201. In the case of music files, the file name may include the appropriate MP3 ID3 tags. The file size information provides an indication of how much data is contained in the file, and is preferably given with respect to the size of the file when compressed if compression is to be used in transfer. The set of distribution characteristics optionally provides a hint or suggestion as to how the file should be distributed. Finally, the expiration information specifies the time at which the file, once transferred, should be deleted from the memory of each recipient node. Note that the original metadata publication may include a declaration that the originating node has the proffered file, but that every other node does not make this declaration until it actually has at least a portion of the file as discussed in greater detail below.

Once the publishing node has transmitted the metadata as in step 303, and all nodes of the peer-to-peer network have received the metadata, each metadata recipient node decides in step 305 whether or not to request the file. A node may have any of a number of reasons to request the file. For example, if an online real-time group interaction module, such as a group audio experience module, instigated the file metadata publication, and the recipient node has active the same type of module, then the recipient node will likely want to request the proffered file.

In addition, in an embodiment of the invention, a node searches its local files to determine whether it already has a copy of the relevant file, and uses any such copy rather than requesting a download from another node. The determination of whether a local copy is the "same" as the advertised copy may be based upon many factors. For example, in the case of audio files, sameness may be inferred from a correspondence in such characteristics as file name, producing artist or other party, and play length. However, in a further embodiment of the invention, this locally sourced file is not used to serve other nodes' requests for the advertised file. This is because there may be differences between the locally sourced copy and the advertised copy, which may or may not be apparent at the locally sourcing node, but which may prevent continuity in downloading when there is a source switch during download by another node. Such differences may lie in the precise compression technique used to reduce the file (for example when the same file is compressed in different manners to produce different final versions), or in the underlying data used to create the file (for example when the files are associated with different cuts of the same song). The decision to use or not to use the local file in this context may be associated with the measure of file sameness that is employed.

If the recipient node decides to request the file, then it checks in step 307 to determine whether any of its direct neighbor nodes have declared that they have the file. If one or more neighbors have declared that they have the file, which means that they have at least a portion of the file, then the node in question decides from which neighbor node to request the file in step 309. This decision may be based on any number of factors including, for example, the computational and connectional characteristics (previously measured file transfer performance, speed, reliability, etc.) of the nodes.

Since multiple nodes may receive portions of a file and then advertise their possession, there is a possibility in the abstract that if the relevant suppliers for these nodes experience problems, the nodes may attempt to obtain the file from each other. This would result in a deadlock since neither node has possession of the entire file. To alleviate this problem, each node that advertises its possession of a file also preferably advertises a generation number for the file. Any node that has or obtains the entire file can advertise its version as a generation 0 file. A node that advertises a partial copy that it is obtaining from a generation 0 source advertises its version as generation 1. In general, each node advertises its version as having a generation one greater than the version that it is simultaneously downloading. When one source node completes its download of a whole copy of the file, it decrements its generation advertised to 0, and the decrement flows through the chain of nodes to which it is directly or indirectly supplying uploads. Thus, the generation number associated with the advertised file versions is another factor usable in an embodiment of the invention to determine which node to obtain the file from, a lower generation being generally required, and a generation equal to the requester's generation typically not being acceptable.

If only one neighbor node has declared possession of the file and has a suitable version, then step 309 is omitted for the requesting node in question. In step 311, the requesting node requests the file from the selected neighboring node in possession of the file and begins receiving the file.

In an embodiment of the invention, once the requesting node has begun receiving the file, it is able to advertise its possession to other nodes. This is because the requesting node may serve the portions of the file that it has already received while simultaneously continuing to receive the file from its supplier at approximately the same rate or greater. This acts in most cases to slightly decrease the latency of file distribution since a node need not wait for completion of file receipt before advertising its possession and serving the file to other nodes. Thus, in step 313, the requesting node transmits a notice to its neighbor nodes that it has possession of the file in question. In step 315, the node in question serves any received requests for the file. Finally, the process terminates at node 319.

If it was determined at step 305 that the node in question does not wish to possess the file then the process flows to step 317, where it is determined if any neighbor node of the node in question has sent an unsolicited file request to the node in question. Because the file distribution is generally on a request only basis as described above, it is possible that a node that wants the file will not have any neighbors that obtain and advertise the file of their own initiative. Thus, after waiting an appropriate amount of time, such as approximately one file download time increment, such a node may send an unsolicited file request to one of its neighbors, prompting that neighbor to retrieve and serve the file in question. In an embodiment of the invention, each peer-to-peer application or module is associated with a particular peer-to-peer network comprised exclusively or primarily of nodes running the same application or module. Thus, in this embodiment, the likelihood of needing to use an unsolicited request is small, since each node will likely want to have the file.

If it is determined at step 317 that no neighbor node of the node in question has sent an unsolicited file request to the node in question, then the process terminates at step 319. If instead it is determined at step 317 that one or more neighbor nodes of the node in question have sent an unsolicited file request to the node in question, then the process flows to step 307 and the steps that logically follow. Note that the node in question may itself need to make an unsolicited file request to obtain the file in an embodiment of the invention.

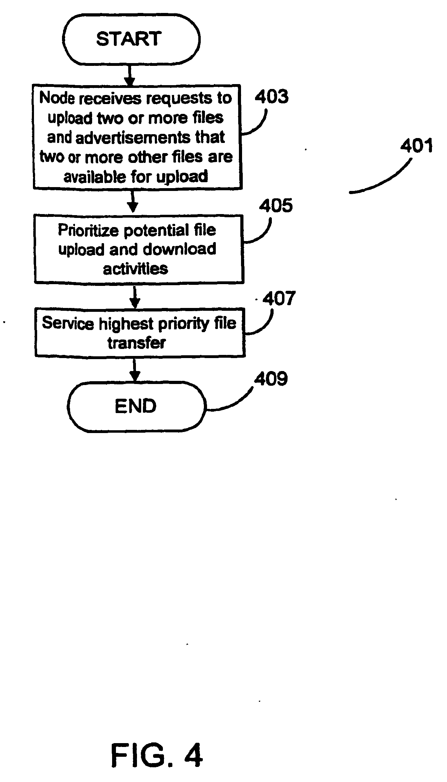

Although not discussed in extensive detail above, there are situations in which a node chooses among multiple files for upload and/or download, and/or when a choice is made between the task of uploading and the task of downloading for the particular node. These situations will be discussed in greater detail with respect to the generalized flow chart 401 of Figure 4. Although the situation presented in Figure 4 involves the simultaneous availability of multiple upload and download opportunities, it will be appreciated that in many cases such multiple opportunities will not exist, and in such situations, some of the steps of the flow chart 401 may be omitted as appropriate.

At step 403, a particular node has received requests to upload two or more particular files and has also received advertisements that two or more other files are available for upload to the node. In the case where the node of interest has unlimited upload and download capacity, and the simultaneous execution (i.e. at substantially the same time, or at least during overlapping time intervals) of all such activities can be accomplished without slowing or delaying any one activity, then all such uploads and downloads are preferably addressed simultaneously. If however, as is more typical, the resources of the node and/or the network are limited so that the fastest download or upload is only achieved when no other download or upload is being serviced, then the fastest possible download or upload will generally only occur by making a choice as to which activity (uploading or downloading) and file to service. In will appreciated that when the upload and download channels are entirely separate as in certain broadband technologies, that the prioritization for each channel can be accomplished separately rather than in a cooperative fashion as shown in Figure 4.

At step 405, the potential file upload and download activities are prioritized. In particular, each file is preferably associated, such as via the metadata, with a numerical priority representing its current importance. The priorities may represent, for example, the relative order of the files in an audio play list, and may change as the play list changes. To the extent that one or more relevant file priorities change during upload or download and affect which file is currently the preferred file to upload or download, the target file may be switched midstream, with the transferred incomplete portion of the previously preferred file being stored for potential future resumption of the transfer. If file upload and download channels are entirely distinct so as to not impact each other, then the prioritization preferably occurs on a per-channel basis. That is, all potential file downloads are prioritized with respect to each other and all potential file uploads are Prioritized with respect to each other. One of skill in the art will additionally appreciate that the described techniques may be easily modified to accommodate multiple independent upload channels and or multiple independent download channels.

At step 407, the highest priority file transfer is serviced. In the case of independent upload and download channels, the highest priority file upload is serviced and the highest priority download is also serviced. It should be again noted that file priorities may change during file transfer, which may result in another file having a higher priority for upload or download then the currently serviced file as discussed above. Finally, at step 409 the process terminates.

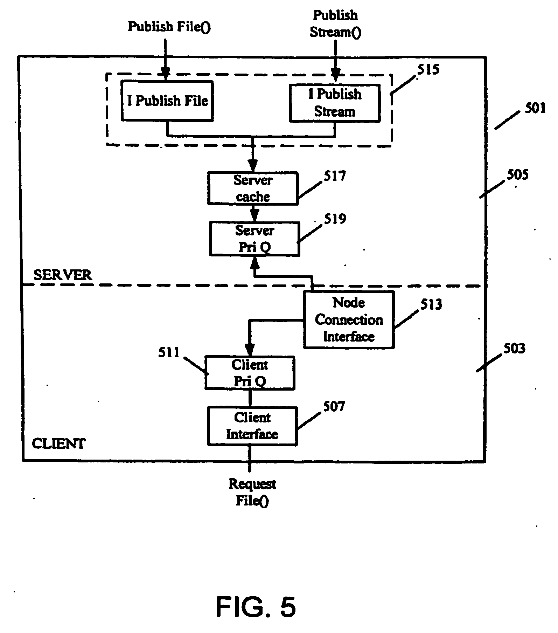

Figure 5 illustrates in schematic fashion a client/server architecture usable according to an embodiment of the invention. In particular, in the peer-to-peer network according to various embodiments of the invention, many nodes operate as both clients and servers, although it will appreciated that one or more nodes may operate only as clients or only as servers. An exemplary node client/server architecture 501 has both client facilities 503 and server facilities 505. The client facilities 503 are responsible for requesting desired files if any and receiving such. In greater detail, the client facilities 503 preferably include a client interface 507 for receiving a request, such as from a module or application, for obtaining a particular file, such as one that has been advertised, from another node. Such requests may be prioritized and queued in priority queue 511. At this point, the node connection interface 513 is used to execute the request and obtain the desired file at the appropriate time based on the assigned request priority.

The server facilities 505 of a node preferably contain a file interface 515 for receiving file data, such as from another module or application on the node. The file information may be compressed, such as to 64k Windows Media ® Audio (WMA) format, or may be in unitary format for bulk upload or may be in streaming format for streaming upload. For clarity, two interfaces, a "Publish File" interface and a "Publish Stream" interface, are illustrated within interface 515. The latter is used to facilitate stream publication of a file by the server portion 505 while the former is used to facilitate unitary publication of the whole file as discussed above. The file data received at the interface 515 is transmitted to the server cache 517 for temporary storage, and may be reordered relative to other pending uploads in the server priority queue 519. Preferably, the highest priority files are received first at the file interface 515, although priorities can change during receipt of file data at the interface 515. Finally, the file data is made available in appropriate priority order to the node connection interface 513. It will be appreciated that file data for upload may come alternatively from the node connection interface 513, such as when the client facilities 503 have caused receipt of file data from another node, and the server facilities are to upload that same data to yet another node. In this case, the incoming file data may be stored in both the client priority queue and the server priority queue.

It will be appreciated that a novel means of content broadcast transfer for use in a peer-to-peer network has been described. In view of the many possible embodiments to which the principles of this invention may be applied, it should be recognized that the embodiments described herein with respect to the drawing figures are meant to be illustrative only and should not be taken as limiting the scope of invention. For example, those of skill in the art will recognize that the elements of the illustrated embodiments shown in software may be implemented in hardware and vice versa or that the illustrated embodiments can be modified in arrangement and detail. of the invention. Therefore, the invention as described herein contemplates all such embodiments as may come within the scope of the following claims

## Claims

1. A method for transferring files between nodes in a peer-to-peer network having a plurality of nodes including an originating node a recipient node and a neighboring node, wherein the neighboring node is directly connected to the recipient node, the method comprising:
receiving at the recipient node metadata that has been transmitted by the originating node and that corresponds to a file possessed by the originating node;
receiving at the recipient node from the neighboring node a notification that the neighboring node has retrieved the file possessed by the originating node; and
determining at the recipient node whether to retrieve the file possessed by the originating node from the neighboring node based on the metadata.

2. The method according to claim 1, further comprising retrieving the file from the neighboring node to the recipient node if it is determined at the recipient node to retrieve the file.

3. The method according to claim 1, wherein the metadata comprises a priority associated with the file.

4. The method according to claim 2, wherein retrieving the file from the neighboring node comprises:
sending a request to the neighboring node for the file; and
receiving from the neighboring node at the recipient node a streaming upload of the file.

5. The method according to claim 4, further comprising broadcasting to other nodes in the peer-to-peer network a notification that the recipient node possesses the file once the recipient node has begun to receive the streaming upload of the file.

6. The method according to claim 5, wherein the notification that the recipient node possesses the file also comprises a generation identifier, wherein the generation identifier distinguishes the file copy available from the recipient node from the file copy available from the originating node.

7. The method according to claim 6, further comprising broadcasting a second notification that the recipient node possesses the file once the recipient node has finished receiving the streaming upload of the file, wherein the second notification comprises a second generation identifier, wherein the second generation identifier does not distinguish the file copy available from the recipient node from the file copy available from the originating node.

8. The method according to claim 1, wherein determining at the recipient node whether to retrieve the file possessed by the originating node from the neighboring node based on the metadata further comprises determining based on the metadata that a local file exists on the recipient node that corresponds to the file possessed by the originating node and thereby determining not to retrieve the file from the neighboring node.

9. The method according to claim 3, wherein the file possessed by the originating node is an audio file.

10. The method according to claim 9, wherein the priority of the file is determined based on the level of the file in an audio play list, wherein a currently playing level in the play list is associated with a higher priority than a level in the play list that is not currently playing.

11. A computer-readable medium having thereon computer executable instructions for performing the method according to claim 1.

12. A method for transferring files between nodes in a peer-to-peer network having a plurality of nodes including an originating node, a recipient node and first and second neighboring nodes, wherein the first and second neighboring nodes are directly connected to the recipient node, the method comprising:
receiving at the recipient node from the first neighboring node a notification that the first neighboring node can supply a first file, wherein the recipient node possesses first metadata associated with the first file, the first metadata comprising a first priority;
receiving at the recipient node a request from the second neighboring node to upload a second file from the recipient node to the second neighboring node, wherein the recipient node possesses second metadata associated with the second file, the second metadata comprising a second priority;
determining which of the first and second priorities corresponds to a higher priority level; and
retrieving the first file from the first neighboring node if the first priority corresponds to a higher priority level than the second priority, and otherwise uploading the second file to the second neighboring node.

13. The method according to claim 12, further comprising broadcasting a first notification that the recipient node can supply the first file once the recipient node has begun to receive the first file, wherein the first notification comprises a first generation identifier, wherein the first generation identifier distinguishes a first file copy available from the recipient node from a first file copy available from the first neighboring node.

14. The method according to claim 13, wherein the first file copy available from the first neighboring node is associated with a second generation identifier, wherein the second generation identifier distinguishes the first file copy available from the first neighboring node from a first file copy available from the originating node

15. The method according to claim 13, further comprising broadcasting a second notification that the recipient node can supply the first file once the recipient node has finished receiving the first file, wherein the second notification comprises a second generation identifier, wherein the second generation identifier does not distinguish the first file copy available from the recipient node from the first file copy available from the first neighboring node.

16. The method according to claim 15, wherein the first and second files are audio files.

17. The method according to claim 9, wherein the first and second priorities are based on the levels of the respective files in an audio play list, wherein a currently playing level in the play list is associated with a higher priority than a level in the play list that is not currently playing.

18. A computer-readable medium having thereon computer executable instructions for performing the method according to claim 12.

19. A method for transferring files between nodes in a peer-to-peer network having a plurality of nodes including a recipient node and at least first and second neighboring nodes, wherein the at least first and second neighboring nodes are directly connected to the recipient node, the method comprising:
requesting by the recipient node a file from a supplying node;
receiving at the recipient node from the supplying node a portion of the requested file having a first generation identifier and assigning to the portion of the requested file a second generation identifier that is greater than the first generation identifier;
receiving at the recipient node from the first neighboring node a first notification that the first neighboring node can supply the requested file, wherein the first notification comprises a first neighbor copy generation identifier;
receiving at the recipient node from the second neighboring node a second notification that the second neighboring node can supply the requested file, wherein the second notification comprises a second neighbor copy generation identifier; and
determining which of the first neighboring node and the second neighboring node to retrieve a remaining portion of the requested file from based on the first and second neighbor copy generation identifiers.

20. A computer-readable medium having thereon computer executable instructions for performing the method according to claim 19.

## Patentansprüche

1. Verfahren zum Übertragen von Dateien zwischen Knoten in einem Peer-to-Peer-Netzwerk, das eine Vielzahl von Knoten hat, einschließlich eines Absendeknotens, eines Empfängerknotens; und eines Nachbarknotens, wobei der Nachbarknoten direkt mit dem Empfängerknoten verbunden ist, wobei das Verfahren umfasst:
beim Empfängerknoten, Empfangen von Metadaten, die durch den Absendeknoten übermittelt worden sind und die sich auf eine Datei beziehen, die sich im Besitz des Absendeknotens befindet;
beim Empfängerknoten, Empfangen einer Benachrichtigung von dem Nachbarknoten, dass der Nachbarknoten die Datei erhalten hat, die sich im Besitz des Absendeknotens befindet;
beim Empfängerknoten, Ermitteln, ob die Datei, die sich im Besitz des Absendeknotens befindet, von dem Nachbarknoten basierend auf den Metadaten abzurufen ist.

2. Verfahren gemäß Anspruch 1, des Weiteren das Abrufen der Datei von dem Nachbarknoten zum Empfängerknoten umfassend, wenn beim Empfängerknoten ermittelt wurde, die Datei abzurufen.

3. Verfahren gemäß Anspruch 1, wobei die Metadaten eine Priorität zugehörig zu der Datei umfassen.

4. Verfahren gemäß Anspruch 2; wobei das Abrufen der Datei von dem Nachbarknoten umfasst:
Senden einer Anfrage für die Datei zu dem Nachbarknoten; und
Empfangen eines streaming upload der Datei von dem Nachbarknoten beim Empfängerknoten.

5. Verfahren gemäß Anspruch 4, des Weiteren das Senden einer Benachrichtigung zu anderen Knoten in dem Peer-to-Peer-Netzwerk umfassend, dass der Empfängerknoten die Datei besitzt, sobald der Empfängerknoten begonnen hat, den streaming upload der Datei zu empfangen.

6. Verfahren gemäß Anspruch 5, wobei die Benachrichtigung, dass der Empfängerknoten die Datei besitzt, auch einen Generationskennzeichner umfasst, wobei der Generationskennzeichner die vom Empfängerknoten verfügbare Dateikopie von der vom Absendeknoten verfügbaren Dateikopie unterscheidet.

7. Verfahren gemäß Anspruch 6, des Weiteren das Senden einer zweiten Benachrichtigung umfassend, dass der Empfängerknoten die Datei besitzt, sobald der Empfängerknoten das Empfangen des streaming upload der Datei abgeschlossen hat, wobei die zweite Benachrichtigung einen zweiten Generationskennzeichner umfasst, wobei der zweite Generationskennzeichner die vom Empfängerknoten verfügbare Dateikopie von der vom Absendeknoten verfügbaren Dateikopie nicht unterscheidet.

8. Verfahren gemäß Anspruch 1, wobei das Ermitteln beim Empfängerknoten, ob die Datei, die sich im Besitz des Absendeknoten befindet, von dem Nachbarknoten basierend auf den Metadaten abzurufen ist, des Weiteren das Ermitteln basierend auf den Matedaten umfasst, dass eine lokale Datei auf dem Empfängerknoten existiert, die der Datei, die sich im Besitz des Absendeknoten befindet, entspricht und dabei Bestimmen, die Datei nicht von dem Nachbarknoten abzurufen.

9. Verfahren gemäß Anspruch 3, wobei die Datei, die sich im Besitz des Absendeknoten befindet, eine Audio-Datei ist.

10. Verfahren gemäß Anspruch 9, wobei die Priorität der Datei basierend auf dem Level der Datei in einer Audio-Playlist ermittelt wird, wobei ein aktuell abspielendes Level in der Playlist mit einer höheren Priorität assoziiert wird als ein Level in der Playlist, das nicht aktuell abgespielt wird.

11. Computer-lesbares Medium, das darauf Computer-ausführbare Instruktionen zum Ausführen des Verfahrens gemäß Anspruch 1 hat.

12. Verfahren zum Übertragen von Dateien zwischen Knoten in einem Peer-to-Peer-Netzwerk, das eine Vielzahl von Knoten hat, einschließlich eines Absendeknotens, eines Empfängerknotens, und eines ersten und eines zweiten Nachbarknotens, wobei der erste und der zweite Nachbarknoten direkt mit dem Empfängerknoten verbunden sind, wobei das Verfahren umfasst:
beim Empfängerknoten, Empfangen einer Benachrichtigung von dem ersten Nachbarknoten, dass der erste Nachbarknoten eine erste Datei liefern kann, wobei der Empfängerknoten erste Metadaten besitzt, die sich auf die erste Datei beziehen, wobei die ersten Metadaten eine erste Priorität umfassen;
beim Empfängerknoten, Empfangen einer Anfrage von dem zweiten Nachbarknoten, eine zweite Datei von dem Empfängerknoten zu dem zweiten Nachbarknoten hochzuladen, wobei der Empfängerknoten zweite Metadaten besitzt, die sich auf die zweite Datei beziehen, wobei die zweiten Metadaten eine zweite Priorität umfassen;
Ermitteln, welche der ersten und der zweiten Priorität einem höheren Prioritätslevel entspricht; und
Abrufen der ersten Datei von dem ersten Nachbarknoten, wenn die erste Priorität einem höheren Prioritätslevel entspricht als die zweite Priorität, und, andererseits Hochladen der zweiten Datei zu dem zweiten Nachbarknoten.

13. Verfahren gemäß Anspruch 12, des Weiteren das Senden einer ersten Benachrichtigung umfassend, dass der Empfängerknoten die erste Datei liefern kann, sobald der Empfängerknoten das Empfangen der ersten Datei begonnen hat, wobei die erste Benachrichtigung einen ersten Generatiönskennzeichner umfasst, wobei der erste Generationskennzeichner eine Kopie der ersten Datei, verfügbar vom Empfängerknoten, von einer Kopie der ersten Datei, verfügbar von dem ersten Nachbarknoten, unterscheidet.

14. Verfahren gemäß Anspruch 13, wobei die Kopie der ersten Datei, verfügbar von dem ersten Nachbarknoten, mit einem zweiten Generationskennzeichner assoziiert ist, wobei der zweite Generationskennzeichner die Kopie der ersten Datei, verfügbar vom ersten Nachbarknoten, von einer Kopie der ersten Datei, verfügbar vom Absendeknoten, unterscheidet.

15. Verfahren gemäß Anspruch 13, des Weiteren das Senden einer zweiten Benachrichtigung umfassend, dass der Empfängerknoten die erste Datei liefern kann, sobald der Empfängerknoten das Empfangen der ersten Datei abgeschlossen hat, wobei die zweite Benachrichtigung einen zweiten Generationskennzeichner umfasst, wobei der zweite Generationskennzeichner die Kopie der ersten Datei, verfügbar vom Empfängerknoten, von der Kopie der ersten Datei, verfügbar von dem ersten Nachbarknoten, nicht unterscheidet.

16. Verfahren gemäß Anspruch 15, wobei die erste und zweite Datei Audio-Dateien sind.

17. Verfahren gemäß Anspruch 9, wobei die erste und zweite Priorität auf den Levels der entsprechenden Dateien in einer Audio-Playlist basieren, wobei ein aktuell abspielendes Level in der Playlist mit einer höheren Priorität assoziiert wird als ein Level in der Playlist, das nicht aktuell abgespielt wird.

18. Computer-lesbares Medium, das darauf Computer-ausführbare Instruktionen zum Ausführen des Verfahrens gemäß Anspruch 12 hat.

19. Verfahren zum Übertragen von Dateien zwischen Knoten in einem Peer-to-Peer-Netzwerk, das eine Vielzahl von Knoten hat, einschließlich eines Empfängerknotens, und-mindestens ersten und zweiten Nachbarknoten, wobei die mindestens ersten und zweiten Nachbarknoten direkt mit dem Empfängerknoten verbunden sind, wobei das Verfahren umfasst:
Abfragen einer Datei durch den Empfängerknoten bei einem liefernden Knoten;
beim Empfängerknoten, Empfangen eines Teils der abgefragten Datei, die einen ersten Generationskennzeichner besitzt, von dem liefernden Knoten, und Zuweisen eines zweiten Generationskennzeichners, der größer ist als der erste Generationskennzeichner, zu dem Teil der abgefragten Datei
beim Empfängerknoten; Empfangen einer ersten Benachrichtigung von dem ersten Nachbarknoten, dass der erste Nachbarknoten die abgefragte Datei liefern kann, wobei die erste Benachrichtigung einen ersten Nachbarkopiegenerationskenzeichner umfasst;
beim Empfängerknoten; Empfangen einer zweiten Benachrichtigung von dem zweiten Nachbarknoten, dass der zweite Nachbarknoten die abgefragte Datei liefern kann, wobei die zweite Benachrichtigung einen zweiten Nachbarkopiegenerationskennzeicher umfasst; und
Ermitteln, von welchem des ersten Nachbarknotens und des zweiten Nachbarknotens, der restliche Teil der angefragten Datei abgerufen werden soll, basierend auf dem ersten und dem zweiten Generationskennzeichner einer Nachbarkopie.

20. Computer-lesbares Medium, das darauf Computer-ausführbare Instruktionen zum Ausführen des Verfahrens gemäß Anspruch 19 hat.

## Revendications

1. Procédé permettant de transférer des fichiers entre des noeuds dans un réseau particulier à particulier ayant une pluralité de noeuds incluant un noeud d'origine, un noeud destinataire et un noeud voisin, dans lequel le noeud voisin est directement relié au noeud destinataire, le procédé comprenant les étapes consistant à :
recevoir sur le noeud destinataire des métadonriées qui ont été émises par le noeud d'origine et qui correspondent à un fichier en possession du noeud d'origine ;
recevoir sur le noeud destinataire en provenance du noeud voisin une notification indiquant que le noeud voisin a extrait le fichier en possession du noeud d'origine ; et
déterminer sur le noeud destinataire s'il y a lieu d'extraire le fichier en possession du noeud d'origine en provenance du noeud voisin en se basant sur les métadonnées.

2. Procédé selon la revendication 1, comprenant en outre l'extraction du fichier entre le noeud voisin et le noeud destinataire s'il est déterminé, sur le noeud destinataire, qu'il y a lieu d'extraire le fichier.

3. Procédé selon la revendication 1, dans lequel les métadonnées comprennent une priorité associée au fichier.

4. Procédé selon la revendication 2, dans lequel l'extraction du fichier sur le noeud voisin comprend les étapes consistant à :
envoyer une demande au noeud voisin concernant le fichier ; et
recevoir du noeud voisin sur le noeud destinataire un chargement en flux continu du fichier.

5. Procédé selon la revendication 4, comprenant en outre la diffusion vers d'autres noeuds du réseau particulier à particulier d'une notification indiquant que le noeud destinataire est en possession du fichier une fois que le noeud destinataire a commencé à recevoir le chargement en flux continu du fichier.

6. Procédé selon la revendication 5, dans lequel la notification indiquant que le noeud destinataire est en possession du fichier comprend également un identificateur de génération, dans lequel l'identificateur de génération distingue la copie de fichier disponible sur le noeud destinataire de la copie de fichier disponible sur le noeud d'origine.

7. Procédé selon la revendication 6, comprenant en outre la diffusion d'une seconde notification indiquant que le noeud destinataire est en possession du fichier une fois que le noeud destinataire a fini de recevoir le chargement en flux continu du fichier, dans lequel la seconde notification comprend un second identificateur de génération, dans lequel le second identificateur de génération ne distingue pas la copie de fichier disponible sur le noeud destinataire de la copie de fichier disponible sur le noeud d'origine.

8. Procédé selon la revendication 1, dans lequel la détermination sur le noeud destinataire du fait qu'il y a lieu d'extraire le fichier en possession du noeud d'origine à partir du noeud voisin en se basant sur les métadonnées comprend en outre la détermination basée sur les métadonnées du fait qu'un fichier local existe sur le noeud destinataire qui correspond au fichier en possession du noeud d'origine, et par conséquent la détermination du fait qu'il n'y a pas lieu d'extraire le fichier du noeud voisin.

9. Procédé selon la revendication 3, dans lequel le fichier en possession du noeud d'origine est un fichier audio.

10. Procédé selon la revendication 9, dans lequel la priorité du fichier est déterminée en se basant sur le niveau du fichier dans une liste de lecture audio, dans lequel un niveau de reproduction en cours dans la liste de lecture est associé à une priorité plus élevée qu'un niveau dans la liste de lecture qui n'est pas en cours de reproduction.

11. Support lisible par ordinateur portant des instructions exécutables par ordinateur pour mettre en oeuvre le procédé conforme à la revendication 1.

12. Procédé permettant de transférer des fichiers entre des noeuds dans un réseau particulier à particulier ayant une pluralité de noeuds incluant un noeud d'origine, un noeud destinataire et des premier et second noeuds voisins, dans lequel les premier et second noeuds voisins sont directement reliés au noeud destinataire, le procédé comprenant les étapes consistant à :
recevoir sur le noeud destinataire en provenance du premier noeud voisin une notification indiquant que le premier noeud voisin peut fournir un premier fichier, dans lequel le noeud destinataire est en possession dés premières métadonnées associées au premier fichier, les premières métadonnées comprenant une première priorité ;
recevoir sur le noeud destinataire une demande, en provenance du second noeud voisin, de chargement d'un second fichier entre le noeud destinataire et le second noeud voisin, dans lequel le noeud destinataire est en possession de secondes métadonnées associées au second fichier, les secondes métadonnées comprenant une seconde priorité ;
déterminer celle des première et seconde priorités qui correspond à un niveau de priorité plus élevé ; et
extraire le premier fichier du premier noeud voisin si la première priorité correspond à un niveau de priorité supérieur à la seconde priorité, et, dans les autres cas, charger le second fichier sur le second noeud voisin.

13. Procédé selon la revendication 12, comprenant en outre la diffusion d'une première notification indiquant que le noeud destinataire peut fournir le premier fichier une fois que le noeud destinataire a commencé à recevoir le premier fichier, dans lequel la première notification comprend un premier identificateur de génération, dans lequel le premier identificateur de génération distingue une première copie de fichier disponible sur le noeud destinataire d'une première copie de fichier disponible sur le premier noeud voisin.

14. Procédé selon la revendication 13, dans lequel la première copie de fichier disponible sur le premier noeud voisin est associée à un second identificateur de génération, dans lequel le second identificateur de génération distingue la première copie de fichier disponible sur le premier noeud voisin d'une première copie de fichier disponible sur le noeud d'origine.

15. Procédé selon la revendication 13,comprenant en outre la diffusion d'une seconde notification indiquant que le noeud destinataire pour fournir le premier fichier une fois que le noeud destinataire a fini de recevoir le premier fichier, dans lequel la seconde notification comprend un second identificateur de génération, dans lequel le second identificateur de génération ne distingue pas la première copie de fichier disponible sur le noeud destinataire de la première copie de fichier disponible sur le premier noeud voisin.

16. Procédé selon la revendication 15, dans lequel les premier et second fichiers sont des fichiers audio.

17. Procédé selon la revendication 9, dans lequel les première et seconde priorités sont basées sur le niveau des fichiers respectifs dans une liste de lecture audio, dans lequel un niveau de reproduction en cours dans la liste de lecture est associé à une priorité supérieure à un niveau dans la liste de lecture qui n'est pas en cours de reproduction.

18. Support lisible par ordinateur portant des instructions exécutables par ordinateur pour mettre en oeuvre le procédé conforme à la revendication 12.

19. Procédé permettant de transférer des fichiers entre des noeuds dans un réseau particulier à particulier ayant une pluralité de noeuds incluant un noeud destinataire et au moins des premier et second noeuds voisins, dans lequel lesdits au moins premier et second noeuds voisins sont directement reliés au noeud destinataire, le procédé comprenant les étapes consistant à :
demander au moyen du noeud destinataire un fichier provenant d'un noeud fournisseur ;
recevoir sur le noeud destinataire en provenance d'un noeud fournisseur une partie du fichier demandé ayant un premier identificateur de génération et affecter à la partie du fichier demandé un second identificateur de génération qui est supérieur au premier identificateur de génération ;
recevoir sur le noeud destinataire en provenance du premier noeud voisin une première notification indiquant que le premier noeud voisin peut fournir le fichier demandé, dans lequel la première notification comprend un premier identificateur de génération de copie de noeud voisin ;
recevoir sur le noeud destinataire du second noeud voisin une seconde notification indiquant que le second noeud voisin peut fournir le fichier demandé, dans lequel la seconde notification comprend un second identificateur de génération de copie de noeud voisin ; et
déterminer celui du premier noeud voisin et du second noeud voisin qui doit extraire une partie restante du fichier demandé en se basant sur les premier et second identificateurs de génération de copie de noeud voisin.

20. Support lisible par ordinateur portant des instructions exécutables par ordinateur pour mettre en oeuvre le procédé conforme à la revendication 19.
